# EUROPÄISCHE PATENTSCHRIFT

(11) **EP 1 627 164 B1**
(45) Veröffentlichungstag und Bekanntmachung des Hinweises auf die Patenterteilung: **08.08.2007**
(21) Anmeldenummer: 04733561.7
(22) Anmeldetag: 18.05.2004
(51) Int. Cl.: F16H 3/54, F16H 37/04, F16H 57/08

(54) **PLANETENGETRIEBE**
PLANETARY GEAR TRAIN
ENGRENAGE PLANETAIRE

(30) Priorität: 23.05.2003 DE 10323254
(43) Veröffentlichungstag der Anmeldung: 22.02.2006
(73) Patentinhaber: ZF FRIEDRICHSHAFEN AG, 88038 Friedrichshafen (DE)
(72) Erfinder: BADER, Josef, 88045 Friedrichshafen (DE)
(86) Internationale Anmeldenummer: PCT/EP2004/005329
(87) Internationale Veröffentlichungsnummer: WO 2004/104445

(56) Entgegenhaltungen:
- EP-A- 0 454 198
- DE-A- 2 908 678
- DE-A- 3 543 269
- DE-A- 4 009 968
- DE-A- 4 121 709

## Beschreibung

Die Erfindung betrifft ein Planetengetriebe nach dem Oberbegriff von Anspruch 1.

Nutzfahrzeuggetriebe mit einer hohen Anzahl an Gangstufen weisen häufig ein an das Hauptgetriebe mit seinen Gangstufen angeschlossenes Bereichsgruppengetriebe auf. Mit einem Bereichsgruppengetriebe lässt sich die Gesamtübersetzung des Hauptgetriebes vergrößern, indem alle Gangstufen des Hauptgetriebes mit jeder Gangstufe des Bereichsgruppengetriebes zusammen genutzt werden können und in wenigstens einer Gangstufe des Bereichsgruppengetriebes die Übersetzung der Gangstufen des Hauptgetriebes untersetzt bzw. übersetzt wird.

Ein Bereichsgruppengetriebe für Kraftfahrzeuge ist beispielsweise aus der gattungsgemäßen DE 41 21 709 A1 bekannt geworden. Mit einem derartigen, dem Hauptgetriebe nachgeschalteten Planetengetriebe besteht die Möglichkeit, das Kraftfahrzeug im Rahmen seiner Gangstufen des Hauptgetriebes jeweils in zwei unterschiedlichen Geschwindigkeitsbereichen zu betreiben. In einer ersten ins Langsame übersetzten Schaltstufe des Bereichsgruppengetriebes ist das Hohlrad des Planetengetriebes über eine Schaltkupplung an das Getriebegehäuse gekuppelt, so dass die Abtriebswelle des Bereichsgruppengetriebes eine geringere Drehzahl als die Ausgangswelle des Hauptgetriebes aufweist. In einer zweiten Schaltstufe erfolgt ein direkter Durchtrieb von der Ausgangswelle des Hauptgetriebes auf die Abtriebswelle des Bereichsgruppengetriebes, wobei über eine Schaltkupplung die direkte Verbindung zwischen der Ausgangswelle des Hauptgetriebes und der Ausgangswelle des Bereichsgruppen hergestellt wird. Die Schalteinrichtung ist sehr aufwendig gestaltet.

Die DE 198 51 895 A1 beschreibt ein weiteres als Planetengetriebe ausgebildetes Bereichsgruppengetriebe. Dabei ist das Hohlrad des Planetengetriebes drehfest mit dem Getriebegehäuse verbunden. Das Sonnenrad des Planetengetriebes ist koaxial zur Ausgangswelle des Hauptgetriebes und gegenüber der Ausgangswelle des Hauptgetriebes frei drehbar angeordnet. Zur Bildung eines Untersetzungsverhältnisses zwischen der Ausgangswelle des Hauptgetriebes und der Ausgangswelle des Bereichsgruppengetriebes kann das Sonnenrad drehfest mit der Ausgangswelle des Hauptgetriebes verbunden werden. Auch dieses Planetengetriebe ist aufwendig und problematisch bei der Lagerung einzelner Bauteile.

Der Erfindung liegt die Aufgabe zugrunde, ein Planetengetriebe und insbesondere die Bauteillagerung zu verbessern.

Die Aufgabe wird gelöst durch ein Planetengetriebe mit den Merkmalen des Anspruchs 1. Ausgestaltungen sind Gegenstand von Unteransprüchen.

Ein Planetengetriebe, das ein Hohlrad, ein Sonnenrad und einen Planetenträger mit Planetenbolzen umfasst, auf dem wenigstens ein Planetenrad gelagert ist, weist eine Schalteinrichtung mit einer Schiebemuffe auf, die in einer Schaltstellung eine direkte Verbindung zwischen einer das Planetengetriebe antreibenden Welle und einer Ausgangswelle des Planetengetriebes ermöglicht und die in einer anderen Schaltstellung eine Drehzahländerung zwischen der antreibenden Welle und der Ausgangswelle des Planetengetriebes ermöglicht. Zur Verbesserung der Lagerung und zur Verringerung von Reibungsverlusten ist der Planetenbolzen in einer Lagerung drehbar im Planetenträger angeordnet, und das Planetenrad ist in einer Lagerung drehbar auf dem drehbaren Planetenbolzen angeordnet.

Vorzugsweise stellt die Lagerung des Planetenbolzens im Planetenträger eine andere Lagerungsart dar, als die Lagerung des Planetenrades auf dem Planetenbolzen. Dabei ist in einer vorteilhaften Ausführungsart der Planetenbolzen im Planetenträger gleitgelagert und das Planetenrad auf dem Planetenbolzen rollengelagert. In einer anderen, ebenfalls vorteilhaften Ausführungsart ist der Planetenbolzen im Planetenträger rollengelagert und das Planetenrad auf dem Planetenbolzen gleitgelagert. Dabei kann der Planetenbolzen Ölversorgungsvorrichtungen aufweisen, die mit einer Getriebeölversorgung in Verbindung stehen.

Vorteilhaft ist eine Vorrichtung, die der Planetenträger aufweist und die ein axiales Verschieben des Planetenbolzens im Planetenträger verhindert.

In einer Ausgestaltungsform weist die Schalteinrichtung eine Neutralstellung auf, die zwischen den beiden Schaltstellungen liegt und bei der die Ausgangswelle des Planetengetriebes nicht angetrieben wird.

Sowohl das Hohlrad als auch das Sonnenrad können Druckkämme aufweisen, die an dem Planetenrad anliegen. Vorteilhafterweise umfasst die Rollenlagerung ein mehrreihiges Lager.

Besonders vorteilhaft gestaltet sich die Erfindung dann, wenn das Planetengetriebe ein Bereichsgruppengetriebe eines Fahrzeuggetriebes darstellt, das in einem drehmomentübertragenden Antriebsstrang an ein Hauptgetriebe angeschlossen ausgebildet ist und bei dem die Ausgangswelle des Hauptgetriebes die antreibende Welle des Planetengetriebes bildet.

Ebenfalls vorteilhaft einsetzen lässt sich die Erfindung bei einem Hauptgetriebe, das zwei Vorgelegewellen und eine schwimmend zwischen den Vorgelegewellen gelagerte Hauptwelle umfasst, die als Ausgangswelle des Hauptgetriebes die antreibende Welle des Planetengetriebes bildet und die an ihrem Ende im Sonnenrad des Planetengetriebes gelagert ist.

Die Erfindung wird anhand einer Zeichnung näher erläutert.
Es zeigen:
- Fig. 1: eine schematische Anordnung des Planetengetriebes;
- Fig. 2: das Planetengetriebe mit einer ersten Schalteinrichtung und
- Fig. 3: ein Planetengetriebe mit einer zweiten Schalteinrichtung.

Ein Schaltgetriebe 2 für ein Fahrzeug weist in einem Getriebegehäuse 4 ein Hauptgetriebe 6 und ein an das Hauptgetriebe 6 anschließendes Bereichsgruppengetriebe in Form eines Planetengetriebes 8 auf. Das Planetengetriebe 8 umfasst einen Planetenträger 10, der mit der Abtriebswelle 12 des Schaltgetriebes 2 als ein gemeinsames Bauteil ausgeführt ist. An der Abtriebswelle 12 ist ein Abtriebsflansch 14 befestigt und die Abtriebswelle 12 ist im Getriebegehäuse 4 in einer Lagerung 16 gelagert. Der Planetenträger 10 weist mehrere auf seinem Umfang verteilte Planetenbolzen 18 auf, von denen hier ein Planetenbolzen gezeigt ist. Auf dem Planetenbolzen 18 ist das Planetenrad 20 in einer Rollenlagerung 22 gelagert. Üblicherweise sind auf dem Umfang des Planetenträgers 10 drei oder fünf Planetenräder 20 verteilt angeordnet. Die Rollenlagerung 22 wird von einem zweireihigen Zylinderrollenlager oder Nadellager gebildet. Das Planetenrad 20 ist außen von einem Hohlrad 24 umgeben, das eine Verzahnung 26 aufweist, die in eine Verzahnung 28 am Getriebegehäuse 4 eingreifen kann.

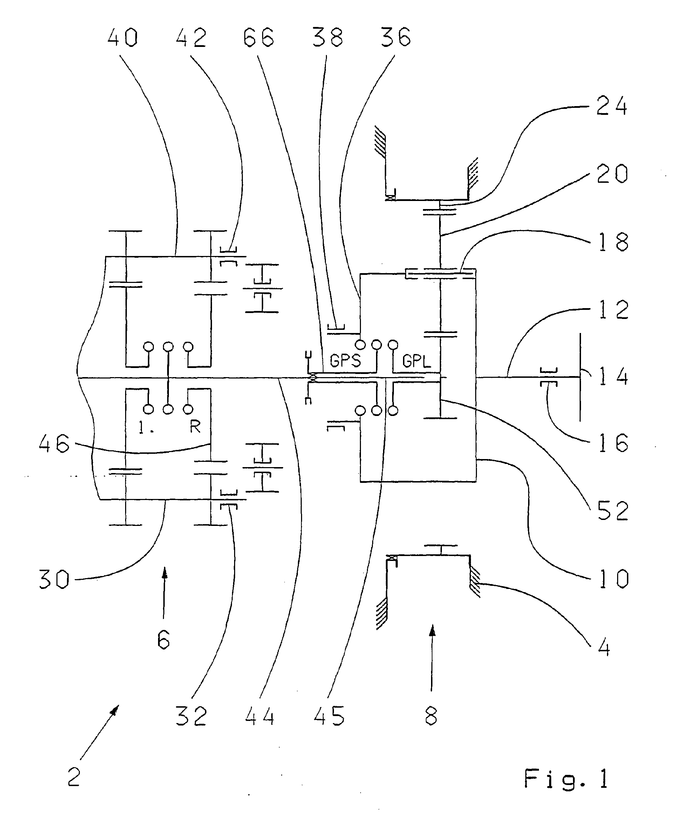

Der Planetenträger 10 weist auf der der Abtriebswelle 12 gegenüber liegenden Seite des Planetengetriebes 8 einen Fortsatz 36 auf, an dem der Planetenträger 10 durch ein Rollenlager 38 im Getriebegehäuse 4 gelagert ist. Eine Vorgelegewelle 30 des Hauptgetriebes 6 ist durch eine Lagerung 32 und eine Vorgelegewelle 40 des Hauptgetriebes 6 ist durch eine Lagerung 42 im Getriebegehäuse 4 gelagert. Die Hauptwelle 44 des Hauptgetriebes 6 trägt an ihrem Ende ein Zahnrad 46 der Rückwärtsgangübersetzung. Das Zahnrad 46 ist auf der Hauptwelle 44 mit leichtem radialen Spiel angeordnet, was für ein Schaltgetriebe mit einer Leistungsverzweigung auf zwei Vorgelegewellen typisch ist. Am Ende der Hauptwelle 44 nach der Fig. 1 ist ein Zapfen 45 vorgesehen, der auch mit einem geschlitzten Profil ausgebildet sein kann. Das Sonnenrad 52 ist auf dem Zapfen 45 der Hauptwelle 44 angeordnet ist, wobei sich nach der Fig. 1 die Hauptwelle 44 im Sonnenrad 52 abstützt. Zwischen dem Sonnenrad 52 und der Abtriebswelle 12 bzw. dem Planetenträger 10 ist eine Hülse 50 angeordnet, die der Ölführung zwischen den Welle dient. Ebenfalls der Ölführung dient eine Hülse 54, die zwischen der Hauptwelle 44 und dem Sonnenrad 52 vorgesehen ist.

Auf dem Sonnenrad 52 sind zwei Druckkämme 56 und 58 angeordnet, die eine axiale Bewegung des Planetenrades 20 relativ zum Sonnenrad 52 verhindern, aber eine Anlage des Planetenrades 20 an die Druckkämme erlauben, um eine axial gerichtete Kraft aufzunehmen, die aus einer Schrägverzahnung des Planetengetriebes 8 resultiert. Zwei weitere Druckkämme 60 und 62 sind radial innerhalb des Hohlrades 24 angeordnet und erlauben ebenfalls eine Anlage des Planetenrades 20. Die beiden Druckkämme 60 und 62 verhindern eine axiale Bewegung des Planetenrades 20 relativ zum Hohlrad 24.

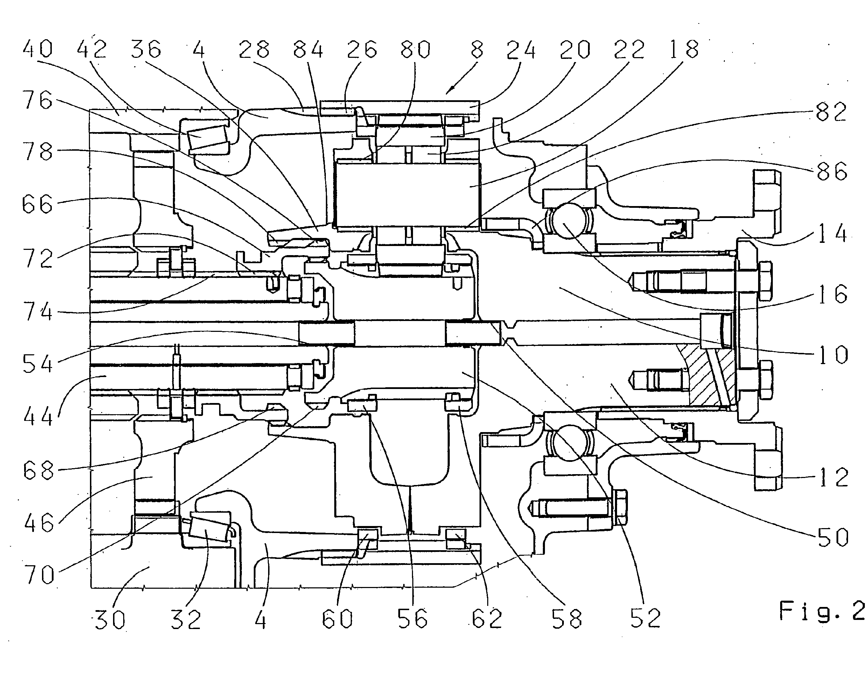

Eine Schiebemuffe 66 weist eine erste Innenverzahnung als Schaltverzahnung 68 auf, die in eine Schaltverzahnung 70 auf dem Sonnenrad 52 eingreift und eine drehfeste Verbindung zwischen der Schiebemuffe 66 und dem Sonnenrad 52 herstellt (Fig. 2). Zur Bildung einer drehfesten Verbindung zwischen der Schiebemuffe 66 und der Hauptwelle 44 weist die Schiebemuffe 66 eine zweite Innenverzahnung 72 auf, die in eine Außenverzahnung 74 an der Hauptwelle 44 eingreift.

Zur Herstellung einer wahlweise drehfesten Verbindung der Hauptwelle 44 mit dem Planetenträger 10 zur Bildung einer direkten Verbindung des Hauptgetriebes 6 mit der Abtriebswelle 12 bei gleichbleibender Drehzahl weist die Schiebemuffe 66 eine Schaltverzahnung 76 auf, die in eine Schaltverzahnung 78 am Fortsatz 36 des Planetenträgers 10 eingreifen kann.

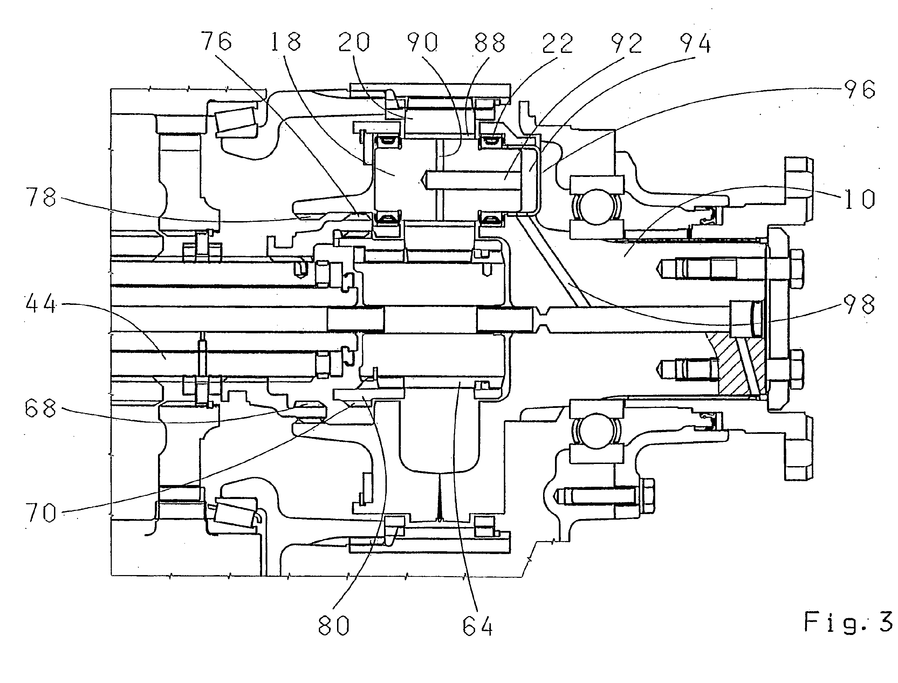

In Fig. 2 und Fig. 3 wird jeweils in der oberen Hälfte des Planetengetriebes 8 die Schaltstellung der Schiebemuffe 66 dargestellt, die über die Schaltverzahnungen 68 und 70 eine drehfeste Verbindung zwischen der Hauptwelle 44 und dem Sonnenrad 52 ermöglicht. In der jeweils unteren Hälfte ist die Schaltstellung der Schiebemuffe 66 dargestellt, die über die Schaltverzahnungen 76 und 78 eine direkte Verbindung der Hauptwelle 44 mit dem Planetenträger 10 zeigt. In dieser Schaltstellung läuft das Planetengetriebe 8 lastfrei, weil das gesamte Drehmoment über den Planetenträger 10 übertragen wird. Zwischen den beiden Schaltstellungen ist jeweils eine Neutralstellung möglich.

In der Fig. 2 ist das Planetenrad 20 auf dem Planetenbolzen 18 in der Rollenlagerung 22 gelagert. Anstatt mehrerer Zylinderrollenlager als Rollenlagerung 22 kommt auch ein mehrreihiges Lager in Betracht, beispielsweise ein zweireihiges Nadellager. Der Planetenbolzen 18 ist im Planetenträger in einer ersten Gleitlagerung 80 und einer zweiten Gleitlagerung 82 drehbar gelagert. Durch die Gleitlagerung 80, 82 ist der Planetenbolzen potentiell auch axial verschiebbar, so dass er axial festgelegt werden muss. Dies geschieht einerseits durch eine Kante 84 am Fortsatz 36 und andererseits durch einen topfförmigen Ring 86, der hier zwischen dem Planetenbolzen 18 und der Lagerung 16 im Getriebegehäuse 4 eingespannt ist.

In der Schaltstellung der Schiebemuffe 66, bei der die Schaltverzahnungen 68 und 70 ineinander greifen, unterliegt das Planetengetriebe 8 einer hohen Belastung. Durch die erfindungsgemäße Verwendung von zwei Lagerungsarten kann diese Belastung verringert werden. Das vom Sonnenrad 52 angetriebene Planetenrad 20 erzeugt in der Rollenlagerung 22 in diesem Schaltzustand nur eine geringe Reibung. In der Gleitlagerung 80, 82 entsteht keine Drehzahldifferenz zwischen benachbarten Teilen.
In der anderen Schaltstellung der Schiebemuffe 66, bei der die Schaltverzahnungen 76 und 78 ineinander greifen, ist das Planetengetriebe 8 praktisch lastfrei. Die Rollenlagerung 22 unterliegt einer großen Reibung, während die Gleitlagerung 80, 82 unbelastetes Gleiten ermöglicht.

Die Fig. 3 zeigt eine geänderte Ausführung des Sonnenrades 52. Das Sonnenrad weist hier in seiner Laufverzahnung 64 eine drehfest angeordnete Hülse 48 auf, die mit ihrer Innenverzahnung 34 in die Laufverzahnung 64 eingreift. Die Hülse 48 weist dann als Außenverzahnung die Schaltverzahnung 70 auf zur Verbindung mit der Schaltverzahnung 68 an der Schiebemuffe 66. Die Gleitlagerung 88 des Planetenrades 20 auf dem Planetenbolzen 18 erfordert eine Ölversorgung dieser Lagerstelle. Dazu sind Bohrungen 90, 92 im Planetenbolzen 18 vorgesehen, die in einen von einer Kappe 96 abgedeckten Raum 94 münden. Dieser Raum 94 steht über eine Leitung 98 mit der sonstigen Ölversorgung des Schaltgetriebes 2 in Verbindung. Der Planetenbolzen 18 ist im Planetenträger mit einer Rollenlagerung 22 gelagert, die hier aus zwei einzelnen Zylinderrollenlagern besteht.

Durch die erfindungsgemäße Anordnung wird eine klauengeschaltete Schalteinrichtung für ein Planetengetriebe gebildet, die auf der Hauptwelle des Getriebes angeordnet ist. Die Schaltung der schnellen Übersetzung des Gruppengetriebes bei direkter Verbindung erfolgt praktisch lastfrei. Da das Hohlrad direkt mit dem Getriebegehäuse verbunden ist, entfällt eine Abstützplatte mit Schaltverzahnung. Über die Abtriebswelle eingeleitete Kräfte können im Gehäusefesten Hohlrad abgestützt werden, wodurch eine zusätzliche Lagerung des Planetenträgers entfallen kann.

Grundsätzlich ist die erfindungsgemäße Schalteinrichtung sowohl für Schaltgetriebe mit einer Vorgelegewelle, als auch für Schaltgetriebe mit einer Leistungsverzweigung auf mehrere Vorgelegewellen geeignet.

### Bezugszeichen

- 2: Schaltgetriebe
- 4: Getriebegehäuse
- 6: Hauptgetriebe
- 8: Planetengetriebe
- 10: Planetenträger
- 12: Abtriebswelle
- 14: Abtriebsflansch
- 16: Lagerung
- 18: Planetenbolzen
- 20: Planetenrad
- 22: Rollenlagerung
- 24: Hohlrad
- 26: Verzahnung
- 28: Verzahnung
- 30: Vorgelegewelle
- 32: Lagerung
- 34: Innenverzahnung
- 36: Fortsatz
- 38: Rollenlager
- 40: Vorgelegewelle
- 42: Lagerung
- 44: Hauptwelle
- 45: Zapfen
- 46: Zahnrad
- 48: Hülse
- 50: Hülse
- 52: Sonnenrad
- 54: Hülse
- 56: Druckkamm
- 58: Druckkamm
- 60: Druckkamm
- 62: Druckkamm
- 64: Laufverzahnung
- 66: Schiebemuffe
- 68: Schaltverzahnung
- 70: Schaltverzahnung
- 72: Innenverzahnung
- 74: Außenverzahnung
- 76: Schaltverzahnung
- 78: Schaltverzahnung
- 80: Gleitlagerung
- 82: Gleitlagerung
- 84: Kante
- 86: Ring
- 88: Gleitlagerung
- 90: Bohrung
- 92: Bohrung
- 94: Raum
- 96: Kappe
- 98: Leitung

## Patentansprüche

1. Planetengetriebe (8), das ein Hohlrad (24), ein Sonnenrad (52) und einen Planetenträger (10) mit Planetenbolzen (18) umfasst, auf dem wenigstens ein Planetenrad (20) gelagert ist, und das eine Schalteinrichtung mit einer Schiebemuffe (66) aufweist, die in einer Schaltstellung eine direkte Verbindung zwischen einer das Planetengetriebe (8) antreibenden Welle (44) und einer Ausgangswelle (12) des Planetengetriebes (8) ermöglicht und die in eine anderen Schaltstellung eine Drehzahländerung zwischen der antreibenden Welle (44) und der Ausgangswelle (12) des Planetengetriebes (8) ermöglicht, **dadurch gekennzeichnet, dass** der Planetenbolzen (18) in einer Lagerung (22, 80) drehbar im Planetenträger (10) angeordnet ist, und das Planetenrad (20) in einer Lagerung (22, 88) drehbar auf dem drehbaren Planetenbolzen (18) angeordnet ist.

2. Planetengetriebe (8) nach Anspruch 1, **dadurch gekennzeichnet, dass** die Lagerung des Planetenbolzen (18) im Planetenträger (10) eine andere Lagerungsart darstellt als die Lagerung des Planetenrades (20) auf dem Planetenbolzen (18).

3. Planetengetriebe (8) nach Anspruch 2, **dadurch gekennzeich-net, dass** der Planetenbolzen (18) im Planetenträger (10) gleitgelagert ist und das Planetenrad (20) auf dem Planetenbolzen (18) rollengelagert ist.

4. Planetengetriebe (8) nach Anspruch 2, **dadurch gekennzeichnet, dass** der Planetenbolzen (18) im Planetenträger (10) rollengelagert ist und das Planetenrad (20) auf dem Planetenbolzen (18) gleitgelagert ist.

5. Planetengetriebe (8) nach einem der Ansprüche 1 bis 4, **dadurch gekennzeichnet , dass** der Planetenträger (10) eine Vorrichtung (84, 86) aufweist, die ein axiales Verschieben des Planetenbolzens (18) im Planetenträger (10) verhindert.

6. Planetengetriebe (8) nach einem der Ansprüche 1 bis 5, **dadurch gekennzeichnet, dass** der Planetenbolzen (18) Ölversorgungsvorrichtungen (90, 92, 94, 98) aufweist, die mit einer Getriebeölversorgung in Verbindung stehen.

7. Planetengetriebe (8) nach einem der Ansprüche 1 bis 6, **dadurch gekennzeichnet, dass** die Schalteinrichtung eine Neutralstellung aufweist, die zwischen den beiden Schaltstellungen liegt und bei der die Ausgangswelle (12) des Planetengetriebes (8) nicht angetrieben wird.

8. Planetengetriebe (8) nach einem der Ansprüche 1 bis 7, **dadurch gekennzeichnet, dass** sowohl das Hohlrad (24) als auch das Sonnenrad (52) Druckkämme (56, 58, 60, 62) aufweisen, die an dem Planetenrad (20) anliegen.

9. Planetengetriebe (8) nach einem der Ansprüche 1 bis 8, **dadurch gekennzeichnet, dass** die Rollenlagerung (22) ein mehrreihiges Lager umfasst.

10. Planetengetriebe (8) nach einem der Ansprüche 1 bis 9, **dadurch gekennzeichnet, dass** das Planetengetriebe (8) ein Bereichsgruppengetriebe eines Fahrzeuggetriebes (2) darstellt, das in einem drehmomentübertragenden Antriebsstrang an ein Hauptgetriebe (6) angeschlossen ausgebildet ist und bei dem die Ausgangswelle (44) des Hauptgetriebes (6) die antreibende Welle des Planetengetriebes (8) bildet.

11. Planetengetriebe (8) nach einem der Ansprüche 1 bis 10, **dadurch gekennzeichnet, dass** das Hauptgetriebe (6) zwei Vorgelegewellen (30, 40) und eine schwimmend zwischen den Vorgelegewellen (30, 40) gelagerte Hauptwelle (44) umfasst, die als Ausgangswelle des Hauptgetriebes (6) die antreibende Welle des Planetengetriebes (8) bildet und die an ihrem Ende (45) im Sonnenrad (52) des Planetengetriebes (8) gelagert ist.

## Claims

1. The invention relates to a planetary transmission (8) which comprises a ring gear (24), a center gear (52) and a planet carrier (10) with a planetary bolt (18) on which at least one planet gear (20) is supported and which features a shifting system with a sliding sleeve (66), which in one shifting position permits a direct connection between a shaft (44) driving the planetary transmission (8) and an output shaft (12) of the planetary transmission (8), and in another shifting position permits a change in speed of the driving shaft (44) and the output shaft (12) of the planetary transmission (8), **characterized in that** the planetary bolt (18) is pivotably arranged in a support (22, 80) in the planet carrier (10) and the planet gear (20) is pivotably arranged in a support (22, 88) on the pivotable planetary bolt (18).

2. A planetary transmission (8) according to claim 1, **characterized in that** the support of the planetary bolt (18) in the planet carrier (10) is of a different type than the support of the planet gear (20) on the planetary bolt (18).

3. A planetary transmission (8) according to claim 2, **characterized in that** the planetary bolt (18) in the planet carrier (10) is friction-bearing-supported while the planet gear (20) on the planetary bolt (18) is roller-bearing-supported.

4. A planetary transmission (8) according to claim 2, **characterized in that** the planetary bolt (18) in the planet carrier (10) is roller-bearing-supported while the planet gear (20) on the planetary bolt (18) is friction-bearing-supported.

5. A planetary transmission (8) according to one of the claims 1 through 4, **characterized in that** the planet carrier (10) features a device (84, 86) which prevents axial displacement of the planetary bolt (18) in the planet carrier (10).

6. A planetary transmission (8) according to one of the claims 1 through 5, **characterized in that** the planetary bolt (18) features oil supply systems (90; 92, 94, 98) which are connected to an oil supply.

7. A planetary transmission (8) according to one of the claims 1 through 6, **characterized in that** the shifting system features a neutral position between the two shifting positions in which the output shaft (12) of the planetary transmission (8) is not driven.

8. A planetary transmission (8) according to one of the claims 1 through 7, **characterized in that** the ring gear (24) and the center gear (52) feature pressure cogs (56, 58, 60, 62) adjacent to the planet gear (20).

9. A planetary transmission (8) according to one of the claims 1 through 8, **characterized in that** the roller bearing (22) comprises a bearing of several rows.

10. A planetary transmission (8) according to one of the claims 1 through 9, **characterized in that** the planetary transmission (8) represents a range-change transmission of an automotive transmission (2) which in a torque-transmitting driveline is connected to a main transmission (6) and where the output shaft (44) of the main transmission (6) constitutes the driving shaft of the planetary transmission (8).

11. A planetary transmission (8) according to one of the claims 1 through 10, **characterized in that** the main transmission (6) comprises two countershafts (30, 40) and, floatingly arranged between the countershafts (30, 40), a main shaft (44), which, as output shaft of the main transmission (6), constitutes the driving shaft of the planetary transmission (8), and the end (45) of which is supported in the center gear (52) of the planetary transmission (8).

## Revendications

1. Boîte de vitesses épicycloïdale (8) comprenant une couronne (24), un planétaire (52) et un arbre porte-satellites (10) avec axes de satellites (18), sur lequel est logé au moins un satellite (20), et qui comprend un dispositif de changement de vitesses avec un coulisseau (66), celui-ci permettant, dans une position de commande, d'établir une liaison directe entre un arbre (44) entraînant la boîte de vitesses épicycloïdale (8) et un arbre de sortie (12) de la boîte de vitesses épicycloïdale (8), et qui, dans une autre position de commande, permet une variation du régime entre l'arbre menant (44) et l'arbre de sortie (12) de la boîte de vitesses épicycloïdale (8), **caractérisée en ce que** l'axe de satellite (18) est disposé en rotation dans un logement (22, 80) dans l'arbre porte-satellites (10), et **en ce que** le satellite (20) est disposé en rotation dans un logement (22, 88) sur l'axe de satellite orientable (18).

2. Boîte de vitesses épicycloïdale (8) selon la revendication 1, **caractérisée en ce que** le logement de l'axe de satellite (18) dans l'arbre porte-satellites (10) représente un autre type de logement que le logement du satellite (20) sur l'axe de satellite (18).

3. Boîte de vitesses épicycloïdale (8) selon la revendication 2, **caractérisée en ce que** l'axe de satellite (18) dans l'arbre porte-satellites (10) est monté sur palier lisse et **en ce que** le satellite (20) sur l'axe de satellite (18) est monté sur palier à billes.

4. Boîte de vitesses épicycloïdale (8) selon la revendication 2, **caractérisée en ce que** l'axe de satellite (18) dans l'arbre porte-satellites (10) est monté sur palier à billes et **en ce que** le satellite (20) sur l'axe de satellite (18) est monté sur palier lisse.

5. Boîte de vitesses épicycloïdale (8) selon une des revendications 1 à 4**, caractérisée en ce que** l'arbre porte-satellites (10) comporte un dispositif (84, 86), empêchant un déplacement axial de l'axe de satellite (18) dans l'arbre porte-satellites (10).

6. Boîte de vitesses épicycloïdale (8) selon une des revendications 1 à 5, **caractérisée en ce que** l'axe de satellite (18) comporte des dispositifs d'alimentation en huile (90, 92, 94, 98), étant liés à un circuit d'alimentation en huile de la boîte de vitesses.

7. Boîte de vitesses épicycloïdale (8) selon une des revendications 1 à 6, **caractérisée en ce que** le dispositif de changement de vitesses comporte une position de point mort se situant entre les deux positions de commande et dans laquelle l'arbre de sortie (12) de la boîte de vitesses épicycloïdale (8) n'est pas entraîné.

8. Boîte de vitesses épicycloïdale (8) selon une des revendications 1 à 7, **caractérisée en ce que** soit la couronne (24) soit la roue solaire (52) comportent des peignes de pression (56, 58, 60, 62) qui adhèrent au satellite (20).

9. Boîte de vitesses épicycloïdale (8) selon une des revendications 1 à 8, **caractérisée en ce que** l'unité de paliers à rouleaux (22) comprend un roulement à plusieurs rangées.

10. Boîte de vitesses épicycloïdale (8) selon une des revendications 1 à 9, **caractérisée en ce que** la boîte de vitesses épicycloïdale (8) représente un groupe-relais d'une boîte de vitesses pour un véhicule (2), lequel est lié - dans une chaîne cinématique transmettant le couple - à une boîte principale (6), sachant que l'arbre de sortie (44) de la boîte principale (6) forme l'arbre menant de la boîte de vitesses épicycloïdale (8).

11. Boîte de vitesses épicycloïdale (8) selon une des revendications 1 à 10, **caractérisée en ce que** la boîte principale (6) comprend deux arbres intermédiaires (30, 40) et un arbre principal (44) logé de façon flottante entre les arbres intermédiaires (30, 40), celui-ci formant en tant qu'arbre de sortie de la boîte principale (6) l'arbre menant de la boîte de vitesses épicycloïdale (8) et lequel est logé avec son extrémité (45) dans la roue solaire (52) de la boîte de vitesses épicycloïdale (8).
